# EUROPÄISCHE PATENTSCHRIFT

(11) **EP 2 275 197 B1**
(45) Veröffentlichungstag und Bekanntmachung des Hinweises auf die Patenterteilung: **03.04.2013**
(21) Anmeldenummer: 10186094.8
(22) Anmeldetag: 28.09.2005
(51) Int. Cl.: B01F 7/04, B01F 15/06, B01F 15/00, B29B 7/48, B29B 7/58, B29B 7/60, C08J 3/00, B01J 19/18

(54) **Mischkneter sowie Verfahren zur Herstellung von Poly(meth)acrylaten unter Verwendung des Mischkneters**
Kneader and method for producing poly(meth)acrylates using the kneader
Malaxeur-mélangeur et procédé de fabrication de poly(méth)acrylates en utilisant le malaxeur-mélangeur

(30) Priorität: 28.09.2004 DE 102004047430
(43) Veröffentlichungstag der Anmeldung: 19.01.2011
(62) Teilanmeldung aus: 08170459.5
(73) Patentinhaber: BASF SE, 67056 Ludwigshafen (DE)
(72) Erfinder: Stueven, Uwe, 65812, Bad Soden (DE); van Miert, Leo, 2040, Antwerpen (BE); van Esbroeck, Dominicus, 210029, Nanjing (CN); Stephan, Oskar, 68766, Hockenheim (DE); Hillebrecht, Annemarie, 36093, Künzell (DE); Wei, Huanmin, 67227, Frankenthal (DE)
(74) Vertreter: Büchel, Edwin

(56) Entgegenhaltungen:
- EP-A- 0 084 426
- EP-A- 0 603 525
- GB-A- 1 453 142
- US-A- 1 418 642
- US-A- 2 368 102
- US-A- 2 504 337
- US-A- 3 332 368
- US-A- 3 463 459
- US-A- 3 951 389
- US-A- 4 037 753
- US-A- 4 681 457
- US-A- 4 761 897
- US-A- 5 382 089
- DATABASE WPI Week 198329 1983 Thomson Scientific, London, GB; Seite 003AN 1983-716002 XP002367583, -& SU 958 108 A (LE T I IM.LENSOVETA) 15. September 1982 (1982-09-15)

## Beschreibung

Die Erfindung betrifft einen Mischkneter mit mindestens zwei Wellen, auf deren Oberflächen Knetbarren auf Stegen angeordnet sind, sowie ein Verfahren zur Herstellung von Poly(meth)acrylaten unter Verwendung des Mischkneters.

Ein Mischkneter gemäß dem Oberbegriff des Anspruchs 1 mit mindestens zwei achsparallelen rotierenden Wellen, auf deren Oberflächen Scheibenflächen mit an ihrem Umfang angeordneten Knetbarren vorgesehen sind, ist z.B. aus EP-A 0 517 068 bekannt. Die Knetbarren sind so angeordnet, dass diejenigen auf der einen Welle in die auf der anderen Welle eingreifen. Abhängig von der Drehzahl der Wellen, welche unterschiedlich sein kann, kann die Anzahl der Knetbarren auf den Wellen variieren. So sind z.B. bei einem Drehzahlverhältnis von 1 : 4 z.B. 8 Knetbarren über den Umfang auf der Hauptwelle angeordnet und 2 Knetbarren auf der als Putzwelle bezeichneten zweiten Welle, die sich viermal so schnell dreht wie die Hauptwelle.

Neben dem Mischen und Kneten dienen die Knetbarren der Putzwelle auch dazu, die Hauptwelle zu reinigen. Um zu vermeiden, dass auf den Wellen Produkt haften bleibt, können diese wie in EP-A 0 603 525 beschrieben, in axiale Richtung oszillierend hin und her bewegbar ausgebildet sein.

Eine verbesserte Förderung des Produktes im Mischkneter kann dadurch erreicht werden, dass die Stege, auf denen die Knetbarren befestigt sind, axial versetzt oder in einen Winkel zur Wellenachse angeordnet sind, so dass durch die Stege ein schneckenförmiger Gang gebildet wird. Eine solche Anordnung der Stege auf den Wellen ist z.B. aus WO 97/12666 bekannt.

WO-A 2004/022608 offenbart den Einsatz eines Mischkneters mit zwei drehbar gelagerten Wellen, auf deren Oberflächen Knetbarren angeordnet sind, zur Herstellung von Superabsorbern. Superabsorber sind dabei gelförmige Polymerisate. Die Polymerisierung wird entweder in einer homogenen wässrigen Monomerlösung oder einer in einer heterogenen Bassinölmischung durchgeführt. Durch den Einsatz des Mischkneters als PolymerisationsReaktor werden kleine Gelpartikel hergestellt.

Die Polymerisation von Monomeren zu wasserabsorbierenden, wasserunlöslichen Polymeren in einem Reaktorsystem, welches mindestens drei Zonen umfasst, ist in WO-A 03/022896 beschrieben. Dabei wird in der ersten Zone kontinuierlich ein Monomer, ein Initiator und Wasser unter solchen Konditionen zugeführt, dass die Polymerisation des Monomers initiiert wird. In der zweiten Zone befindet sich eine Gelphase, die durch die Polymerisation des Monomers erzeugt wird und in der dritten Zone wird die Gelphase granuliert.

WO-A 01/38402 offenbart ebenfalls ein Verfahren zur kontinuierlichen Herstellung von vernetzten feinteiligen gelförmigen Polymerisation. Die Reaktion wird dabei in einem Mischkneter mit mindestens zwei achsparallel rotierenden Wellen durchgeführt, wobei sich auf den Wellen mehrere Knet- und Transportelemente befinden, die eine Förderung der am Anfang des Mischkneters zugegebenen Stoff in axiale Richtung zum Ende des Mischers bewirken.

Nachteil bei den aus dem Stand der Technik bekannten Mischknetern ist, dass mit den vorgesehenen und benötigten Antrieben aufgrund der Polymerisation und damit einhergehenden Produktkonsistenz große Scherkräfte im Mischkneter auftreten können, die zu Rissbildungen in den Wellen und zur Schädigung der Knetbarren führen können.

Aufgabe der Erfindung ist es, einen Mischkneter im Produktionsmaßstab bereitzustellen, dessen Wellen gegen die hohen auftretenden Scherkräfte mechanisch stabil sind. Eine weitere Aufgabe der Erfindung ist es, ein Verfahren zur Poly(meth)acrylatherstellung bereitzustellen, das kontinuierlich über einen längeren Zeitraum betrieben werden kann.

Gelöst wird die Aufgabe durch einen Mischkneter zur Herstellung von Poly(meth)acrylaten, der mindestens zwei Wellen umfasst, auf deren Oberflächen Knetbarren auf Stegen angeordnet sind und die von einem Gehäuse umschlossen sind, in dem mindestens eine Öffnung oberhalb der Wellen und mindestens eine Öffnung zur Produktabfuhr ausgebildet sind, wobei die Wellen an beiden Enden mindestens einfach drehbar gelagert und mindestens an einem Ende angetrieben sind, wobei die mindestens eine Öffnung oberhalb der Wellen ist durch einen Verdränger verschlossen, dessen den Wellen zugewandte Seite so ausgebildet ist, dass zwischen dem Verdränger und den Knetbarren der Wellen ein Spalt vorhanden ist, dessen Spaltweite maximal der durchgängigen Spaltweite zwischen Knetbarren und Gehäuse entspricht.

In einer Ausführungsform ist zusätzlich mindestens eines der nachfolgenden Merkmale gewährleistet:
(a) die Konstruktion der Wellen ist so ausgeführt, dass die Biege-Eigenfrequenzen der Wellen einen Abstand von mindestens 5 %, bevorzugt von mindestens 15 % und insbesondere von mindestens 20 % zu den Erregerfrequenzen aufweisen,
(b) mindestens eine Welle ist als Hohlwelle ausgebildet und wird von einem Temperiermedium durchströmt, wobei der Einlass auf der einen Seite der Welle und der Auslass auf der anderen Seite der Welle angeordnet ist.

In einer weiteren Ausführungsform ist der Öffnungsquerschnitt der Öffnung zur Produktabfuhr während des Betriebes einstellbar.

Die weitere Aufgabe wird durch ein Verfahren zur Poly(meth)acrylatherstellung gelöst, bei welchem der erfindungsgemäße Mischkneter verwendet wird.

In einer besonders bevorzugten Ausführungsform der Erfindung sind alle Merkmale gleichzeitig gewährleistet.

Der Mischkneter weist vorzugsweise ein Reaktorvolumen von mindestens 500 I, mehr bevorzugt von mindestens 2000 I und besonders bevorzugt von mindestens 5000 I auf.

Bei einem Mischkneter mit zwei Wellen wird eine Welle als Hauptwelle und die zweite Welle als Putzwelle bezeichnet. Es sind sowohl auf der Hauptwelle als auch auf der Putzwelle Knetbarren angeordnet, die jede beliebige geeignete Form aufweisen können. Die Anzahl der über den Umfang verteilten Knetbarren auf der Hauptwelle kann sich dabei von der auf der Putzwelle unterscheiden. Bei einer unterschiedlichen Anzahl an Knetbarren auf Haupt- und Putzwelle werden diese mit unterschiedlichen Drehzahlen angetrieben. Als Putzwelle wird dabei diejenige Welle bezeichnet, die über den Umfang verteilt weniger Knetbarren aufweist und schneller rotiert. Das Drehzahlverhältnis ist dabei vom Verhältnis
der Anzahl der Knetbarren - wie z.B. in EP-A 0 517 068 beschrieben - abhängig. Die Wellen können entweder gleich- oder gegensinnig angetrieben werden.

Aufgrund der Rotationsbewegung der Wellen und durch ungleichmäßig auf die Wellen wirkende Kräfte werden diese zu Eigenschwingungen angeregt. Die ungleichmäßig wirkenden Kräfte resultieren z.B. aus der Zerkleinerung des Produktes in einen rieselfähigen Zustand.

Eine Schwingungsanregung der Welle wird vermieden, wenn die Biege-Eigenfrequenzen der Welle mindestens 5 %, bevorzugt mindestens 15 % und besonders bevorzugt mindestens 20% Abstand zu den Erregerfrequenzen aufweisen. Die Eigenfrequenzen ergeben sich dabei aus der Wellenkonstruktion, den Wellenmaterialien und der Wandstärke der Welle. Die Erregerfrequenzen ergeben sich aus der Drehzahl und dem Vielfachen der Drehzahl.
Eine weitere Ursache für das Auftreten von Spannungen in der Welle, die dann zu Rissbildung führen, ist das Anbacken von Produkt auf der Welle, das nicht vollständig abgereinigt wird. Durch Kühlung der Wellen bildet sich auf der Wellenoberfläche eine Kondensatschicht, durch die das Anbacken von Produkt verhindert wird. Die Kühlung der Wellen erfolgt durch Durchströmen der Wellen mit Temperiermedium. Das Temperiermedium hat dabei vorzugsweise eine Eintrittstemperatur von maximal 80°C, mehr bevorzugt von maximal 40°C und besonders bevorzugt von maximal 20°C.

Aus dem Stand der Technik ist es bekannt, Ein- und Auslass für das Temperiermedium auf der gleichen Seite der Welle anzuordnen. Dies macht einen komplexen Aufbau der Welle erforderlich, da das Temperiermedium zunächst durch die gesamte Welle hindurchgeführt werden muss und anschließend über einen weiteren innerhalb der Welle liegenden Kanal wieder zurückgeführt werden muss. Dieser komplexe Aufbau macht eine große Anzahl weiterer Schweißnähte erforderlich, die während des Betriebes stark belastet werden und Schaden nehmen können.

In einer bevorzugten Ausführungsform des erfindungsgemäßen Mischkneters wird das Temperiermedium über einen Einlass auf der einen Seite der Welle zugeführt und über einen Auslass an der anderen Seite der Welle wieder abgeführt. Die Kühlung erfolgt vorzugsweise im Gegenstrom. Das heißt, dass das Temperiermedium auf der Seite der Wellen zugegeben wird, auf der das Produkt abgeführt wird. Als Temperiermedien eignen sich z.B. Wasser oder Thermalöle.

Die mindestens eine Öffnung ist oberhalb der Wellen als Dom im Gehäuse ausgebildet. Bei den aus dem Stand der Technik bekannten Mischknetem kann sich Produkt im Dom ansammeln und anbacken. Diese Anbackungen führen, sobald sie aus dem Dom wieder in den Mischkneter zurückgelangen, zu einer erhöhten Scherbeanspruchung der Knetbarren und der Wellen, woraus wiederum eine erhöhte Neigung zu Rissbildung resultiert. Um die Anbackungen bzw. Ablagerungen zu vermeiden, wird die mindestens eine Öffnung oberhalb der Wellen durch einen Verdränger verschlossen, dessen den Wellen zugewandte Seite so ausgebildet ist, dass zwischen dem Verdränger und den Knetbarren der Wellen ein Spalt ausgebildet ist, dessen Spaltweite vorzugsweise maximal der durchgängigen Spaltweite zwischen Knetbarren und Gehäuse entspricht.

In einer bevorzugten Ausführungsform ist im Verdränger, mit dem der Dom oberhalb der Wellen im Gehäuse verschlossen ist, mindestens ein Kanal zur Eduktzufuhr ausgebildet. Abhängig davon, ob flüssige oder feste Edukte zugeführt werden bzw. abhängig vom Volumenstrom der zugeführten Edukte, wird der Kanal zur Eduktzufuhr in unterschiedlich großen Querschnitten ausgeführt. Zur Feststoffzufuhr ist in einer besonders bevorzugten Ausführungsform eine Dosiervorrichtung im Kanal zur Eduktzufuhr aufgenommen. Als Dosiervorrichtung eignet sich z.B. eine Schnecke, eine Doppelschnecke, ein Zellenrad oder jede andere, dem Fachmann bekannte technische Dosiervorrichtung.

Der Verdränger ist vorzugsweise so ausgebildet, dass er durch eine Schiebepassung passgenau von der Öffnung oberhalb der Wellen aufgenommen wird, so dass die Entstehung von Totzonen zwischen der Öffnung oberhalb der Wellen und dem Verdränger vermieden wird.

In einer bevorzugten Ausführungsform ist der mindestens eine Kanal zur Eduktzufuhr im Verdränger mit einer Kunststoffoberfläche versehen. Hierzu kann der Kanal entweder durch einen Kunststoffkanal, welcher durch den Verdränger hindurchgeführt ist, hergestellt sein oder der Kanal wird mit einem Kunststoff beschichtet. Geeignete Kunststoffe sind zum Beispiel Polyolefine, besonders geeignet ist Polypropylen.

Bei mindestens zwei Kanälen im Verdränger sind die den Wellen zugewandten Öffnungen vorzugsweise nah zueinander angeordnet.

In Totzonen kann sich Produkt ansammeln und polymerisieren, woraus wiederum eine erhöhte Belastung der Knetbarren und der Wellen resultiert, sobald das polymerisierte Produkt aus den Totzonen zurück in den durchmischten Bereich gelangt.

Der Mischkneter wird vorzugsweise so betrieben, dass durch eine ausreichende Zerkleinerung des Produktes die Entstehung von Klumpen aus Ablagerungen in Totzonen vermieden wird. Diese können z.B. auch im Bereich der Öffnung zur Produktabfuhr oder in anderen Bereichen des Mischkneters auftreten. Es hat sich gezeigt, dass die Zerkleinerung mit zunehmenden Füllgrad des Mischkneters zunimmt. Der Füllgrad innerhalb des Mischkneters lässt sich durch den Öffnungsquerschnitt der Öffnung zur Produktabfuhr einstellen. So führt eine Verkleinerung des Öffnungsquerschnittes zu einer Erhöhung des Füllgrades bei konstanter Drehzahl der Wellen und bei gleichem Produkt. Deshalb ist der Öffnungsquerschnitt der Öffnung zur Produktabfuhr vorzugsweise während des Betriebes einstellbar. Dies erlaubt die Einstellung des Füllgrades ohne wiederholtes An- und Abfahren des Mischkneters, welches einen hohen Zeitaufwand erfordert.

Die Einstellung des Öffnungsquerschnittes erfolgt in einer ersten Ausführungsform durch eine in axialer Richtung verschiebbare Klappe. In einer weiteren Ausführungsform wird der Öffnungsquerschnitt der Öffnung zur Produktabfuhr durch eine in tangentiale Richtung verschiebbare Klappe eingestellt. Weiterhin ist es auch möglich, eine Klappe einzusetzen, die gleichzeitig in axialer und tangentialer Richtung verschiebbar ist. Die bevorzugte Richtung zum Verschließen der Öffnung zur Produktabfuhr bei in tangentialer Richtung verschiebbarer Klappe ist von unten nach oben.

Die Öffnung zur Produktabfuhr kann entweder auf der Seite der Hauptwelle, auf der Seite der Putzwelle oder an der Stirnseite des Mischkneters angeordnet sein. Die Öffnung zur Produktabfuhr hat vorzugsweise einen rechteckförmigen Querschnitt und weist einen Öffnungswinkel auf, der im Bereich von 10 bis 20°, bevorzugt im Bereich von 15 bis 20° und besonders bevorzugt bei 15° liegt. Die Spitze des Öffnungswinkels liegt dabei auf der Achse der Welle, auf deren Seite die Öffnung zur Produktabfuhr angeordnet ist. Die Unterkante der Öffnung zur Produktabfuhr liegt bei tangential verstellbarer Klappe zum Einstellen des Öffnungsquerschnittes vorzugsweise bei einem Winkel im Bereich von 30 bis 55° bezogen auf die Senkrechte von oben, wobei die Spitze des Winkels ebenfalls auf der Achse der Welle liegt, auf deren Seite die Öffnung angeordnet ist.

Neben einer in axialer Richtung verschiebbaren Klappe oder einer in tangentialer Richtung verschiebbaren Klappe ist es auch möglich, den Öffnungsquerschnitt der Öffnung zur Produktabfuhr durch eine in axialer Richtung verschiebbare Klappe und eine in tangentialer Richtung verschiebbare Klappe einzustellen.

In einer bevorzugten Ausführungsform wird die Öffnung zur Produktabfuhr durch ein während des Betriebes variables Wehr in der Gehäusewand gebildet. Durch die Höhe des Wehres lässt sich ebenfalls der Füllgrad im Mischkneter einstellen. Dabei ist der Füllgrad weiterhin abhängig von der Produktrezeptur, dem Durchsatz und der Drehzahl. Die Oberkante des Wehres bildet dabei die Unterkante der Öffnung zur Produktabfuhr. Die Höhe des Wehres wird vorzugsweise durch tangentiales Verschieben des Wehres während des Betriebes eingestellt.

Um zu vermeiden, dass beim Anfahren des Mischkneters große Scherkräfte auf die Wellen übertragen werden, wird der Mischkneter bei oder vor einem Stillstand vollständig entleert. Wenn der Mischkneter nicht entleert wird, härtet - insbesondere bei der Poly(meth)acrylatherstellung - das Produkt weiter aus, wodurch große klumpenartige Produkte entstehen können, die beim erneuten Anfahren zunächst zerkleinert werden müssen. Diese klumpenartigen Produkte führen zu einer erhöhten Scherbeanspruchung der Knetbarren und der Stege, auf denen die Knetbarren befestigt sind. Um den Mischkneter entleeren zu können, ist in einer bevorzugten Ausführungsform auf der Produktentnahmeseite eine Entleerungsöffnung ausgebildet. Die Entleerungsöffnung befindet sich vorzugsweise unterhalb der Mittelachse im Gehäuse und hat eine Querschnittsfläche von bevorzugt mindestens 10000 mm², mehr bevorzugt mindestens 40000 mm² und besonders bevorzugt mindestens 80000 mm².

Da das Gehäuse vorzugsweise mit einem Doppelmantel ausgeführt ist, um ein Temperieren des Mischkneters zu ermöglichen, ist die Entleerungsklappe in einer bevorzugten Ausführungsform in dem die Öffnung zur Produktabfuhr bildenden Wehr ausgebildet, da das Wehr vorzugsweise als einfache Wand und nicht als Doppelmantel ausgeführt ist. An die Öffnung zur Produktentnahme schließt sich vorzugsweise ein Ablaufschacht an, dessen Wände mit einer Isolierung versehen sind.

Als Werkstoffe für die Wellen, die Stege, die Knetbarren und das Gehäuse sowie die Verdränger eignen sich alle hochlegierten austenitischen Stähle, ferritisch-austenitischen Duplexwerkstoffe, Nickelbasislegierungen und Titan. Bei der Auswahl des geeigneten Werkstoffes ist darauf zu achten, dass der Werkstoff gegen die bei der Poly(meth)acrylatherstellung auftretenden pH-Werte im Bereich von pH 3 bis 10, vorzugsweise pH 5 bis 8 stabil ist.

Der erfindungsgemäß ausgebildete Mischkneter wird vorzugsweise zur Herstellung von vernetzten, feinteiligen, gelförmigen Poly(meth)acrylaten verwendet.

Poly(meth)acrylate oder damit verwandte Polymere werden im Allgemeinen durch Copolymerisieren von
a) wasserlöslichen, monoethylenisch ungesättigten Monomeren,
b) 0,001 bis 5 Mol-% bezogen auf die Monomere (a), mindestens zwei ethylenisch ungesättigte Doppelbindungen enthaltenden Monomeren und
c) 0 bis 20 Mol-% bezogen auf die Monomere (a) wasserunlöslichen monoethylenisch ungesättigten Monomeren
   in 20 bis 80 gew.-%iger wässriger Lösung in Gegenwart von Initiator bei Temperaturen von 0 bis 140°C hergestellt.

Wasserlösliche monoethylenisch ungesättigte Monomere der Gruppe (a) sind beispielsweise ethylenisch ungesättigte C₃-bis C₆-Carbonsäuren, deren Amide und Ester mit Aminoalkoholen der Formel 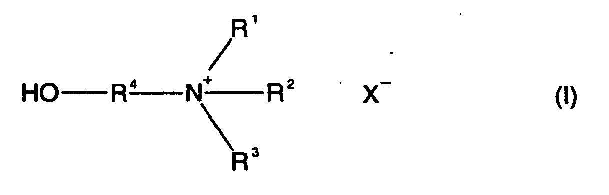 in der R⁴ C₂ bis C₅-Alkylen und R¹, R², R³ unabhängig voneinander Wasserstoff, Methyl, Ethyl oder Propyl bedeuten. Bei diesen Verbindungen handelt es sich beispielsweise um Acrylsäure, Methacrylsäure, Crotonsäure, Itaconsäure, Maleinsäure, Fumarsäure sowie den Alkali- oder Ammoniumsalzen dieser Säuren, Acrylamid, Methacrylamid, Crotonsäureamid, Dimethylaminoethylacrylat, Diethylaminoethylacrylat, Dimethylaminopropylacrylat, Dimethylaminobutylacrylat, Diethylaminoethylmethacrylat, Dimethylaminoethylmethacrylat, Dimethylaminopropylmethacrylat, Dimethylaminoneopentylacrylat und Dimethylaminoneopentylmethacrylat. Die basischen Acrylate und Methacrylate werden in Form der Salze mit starken Mineralsäuren, Sulfonsäuren oder Carbonsäuren oder in quaternisierter Form eingesetzt. Das Anion X⁻ für die Verbindungen der Formel I ist der Säurerest der Mineralsäuren bzw. der Carbonsäuren oder Methosulfat, Ethosulfat oder Halogenid aus einem Quaternierungsmittel.

Weitere wasserlösliche Monomere der Gruppe (a) sind N-Vinylpyrrolidon, Acrylamidopropansulfonsäure, Vinylphosphonsäure und/oder Alkali- bzw. Ammoniumsalze der Vinylsulfonsäure. Die anderen Säuren können ebenfalls entweder in nicht neutralisierter Form oder in partiell bzw. bis zu 100 % neutralisierter Form bei der Polymerisation eingesetzt werden. Als wasserlösliche Monomere der Gruppe (a) eignen sich auch Diallylammoniumverbindungen, wie Dimethyldiallylammoniumchlorid, Diethyldiallylammoniumchlorid oder Diallylpiperidiniumbromid, N-Vinylimidazoliumverbindungen, wie Salze oder Quaternisierungsprodukte von N-Vinylimidazol und 1-Vinyl-2-methylimidazol, und N-Vinylimidazoline, wie N-Vinylimidazolin, 1-Vinyl-2-methylimidazolin, 1-Vinyl-2-ethylimidazolin oder 1-Vinyl-2-n-propylimidazolin, die ebenfalls in quaternisierter Form oder als Salz bei der Polymerisation eingesetzt werden.

Bevorzugte Monomere der Gruppe (a) sind Acrylsäure, Methacrylsäure sowie die Alkali- oder Ammoniumsalze dieser Säuren, Acrylamid und/oder Methacrylamid. Diese Monomere können in jedem beliebigen Verhältnis miteinander copolymerisiert werden.

Die Polymerisation der Monomere der Gruppe (a) erfolgt in Gegenwart von Vernetzern (Monomere der Gruppe (b)). Die Vernetzer enthalten mindestens zwei ethylenisch ungesättigte Doppelbindungen.

Geeignete Vernetzer sind beispielsweise N,N'-Methylenbisacrylamid, Polyethylenglykoldiacrylate und Polyethylenglykoldimethacrylate, die sich jeweils von Polyethylenglykolen eines Molekulargewichts von 126 bis 8500, vorzugsweise 400 bis 2000, ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether von Polyethylenglykolen eines Molekulargewichts von 126 bis 4000, Trimethylolpropandiallylether, Butandioldivinylether, Pentaerythrittriallylether und/oder Divinylethylenharnstoff. Vorzugsweise setzt man wasserlösliche Vernetzer ein, z. B. N,N-Methylenbisacrylamid, Polyethylenglykoldiacrylat, Polyethylenglykoldimethacrylate, Pentaerythrittriallylether und/oder Divinylharnstoff. Die Monomere der Gruppe (b) werden in Mengen von 0,001 bis 5, vorzugsweise 0,005 bis 0,5 Mol-% bezogen auf die Monomere (a) bei der Copolymerisation eingesetzt.

Die Copolymerisation der Monomere der Gruppen (a) und (b) kann - sofern eine Änderung der Eigenschaften der Copolymerisate gewünscht wird - zusätzlich noch in Gegenwart von Monomeren der Gruppe (c) durchgeführt werden. Als Monomere der Gruppe (c) kommen beispielsweise Hydroxyethylacrylat, Hydroxypropylacrylat, Hydroxyethylmethacrylat, Hydroxypropylmethacrylat, Acrylnitril und/oder Methacrylnitril in Betracht. Außerdem eignen sich Ester der Acrylsäure oder Methacrylsäure mit 1 bis 18 Kohlenstoffatome enthaltenden einwertigen Alkoholen, z. B. Methylacrylat, Ethylacrylat, Propylacrylat, Isopropylacrylat, n-Butylacrylat, Isobutylacrylat, Hexylacrylat, 2-Ethylhexylacrylat, Stearylacrylat, die entsprechenden Ester der Methacrylsäure, Fumarsäurediethylester, Maleinsäurediethylester, Maleinsäuredimethylester, Maleisäuredibutylester, Vinylacetat und Vinylpropionat. Sofern die Monomere der Gruppe (c) zur Modifizierung der wasserlöslichen Poly(meth)acrylate verwendet werden, setzt man 0,5 bis 20, vorzugsweise 2 bis 10 Mol-% bezogen auf die Monomere (a) ein.
Die wasserunlöslichen Monomere können, falls sie bei der Copolymerisation mit eingesetzt werden, mit Hilfe von Emulgatoren in der wässrigen Lösung fein verteilt werden. Geeignete Emulgatoren sind beispielsweise ethoxylierte Nonylphenole, ethoxyliertes Ricinusöl, Alkylsulfate, Sorbitanfettsäureester, ethoxylierte Sorbite, ethoxylierte Sorbitanfettsäureester und Alkylsulfonate.

Solche Emulgatoren werden in einer Menge von 0 bis 3 Gew.-% bezogen auf die Monomere (a) eingesetzt.

Die Polymerisation kann gegebenenfalls in Gegenwart der üblichen Polymerisationsregler erfolgen. Geeignete Polymerisationsregler sind beispielsweise Thioverbindungen, wie Thioglykolsäure, Mercaptoalkohole, z.B. 2-Mercaptoethanol, Mercaptopropanol und Mercaptobutanol, Dodecylmercaptan, Ameisensäure, Ammoniak und Amine, z.B. Ethanolamin, Diethanolamin, Triethanolamin, Triethylamin, Morpholin und Piperidin.

Die Monomere (a), (b) und gegebenenfalls (c) werden in 20 bis 80, vorzugsweise 20 bis 50, insbesondere 30 bis 45gew.-%iger wässriger Lösung in Gegenwart von Polymerisationsinitiatoren miteinander copolymerisiert. Als Polymerisationsinitiatoren können sämtliche unter den Polymerisationsbedingungen in Radikale zerfallende Verbindungen eingesetzt werden, z. B. Peroxide, Hydroperoxide, Wasserstoffperoxid, Persulfate, Azoverbindungen und die sogenannten Redoxkatalysatoren. Bevorzugt ist der Einsatz von wasserlöslichen Katalysatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperiso-butyrat, tert.-Butylper-2-ethylhexanoat, tert.-Butylperisononanoat, tert.-Butylpermaleat, tert.-Butylperbenzoat, tert.-Butylper-3,5,5-tri-methylhexanoat und tert.-Amylperneo-dekanoat. Weitere geeignete Polymerisationsinitiatoren sind Azostarter, z.B. 2,2'-Azobis-(2-amidinopropan)dihydrochlorid, 2,2'-Azobis-(N,N-dimethylen)isobutyramidindihydrochlorid, 2-(Carbamoylazo)isobutyronitril und 4,4'-Azobis-(4-cyano-valeriansäure). Die genannten Polymerisationsinitiatoren werden in üblichen Mengen eingesetzt, z.B. in Mengen von 0,01 bis 5, vorzugsweise 0,1 bis 2 Mol-%, bezogen auf die zu polymerisierenden Monomere.

Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetall-hydrogensulfit, -sulfit, - thiosulfat, -hyposulfit, -pyrosulfit oder -sulfid, Metallsalze, wie Eisen-II-ionen oder Silberionen oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man 1·10⁻⁵ bis 1 Mol-% der reduzierenden Komponente des Redoxkatalysatorsystems und 1·10⁻⁵ bis 5 Mol-% der oxidierenden Komponente des Redoxkatalysators. Anstelle der oxidierenden Komponente des Redoxkatalysators oder zusätzlich kann man auch einen oder mehrere wasserlösliche Azostarter verwenden.

Bevorzugt wird im erfindungsgemäßen Verfahren ein Redoxsystem bestehend aus Wasserstoffperoxid, Natriumperoxodisulfat und Ascorbinsäure eingesetzt. In einer üblichen Ausführungsform werden diese Komponenten in den Konzentrationenl·10⁻² Mol-% Wasserstoffperoxid, 0,084 Mol-% Natriumperoxodisulfat und 2,5·10⁻³ Mol-% Ascorbinsäure bezogen auf die Monomere eingesetzt.

Die wässrige Monomerlösung kann den Initiator gelöst oder dispergiert enthalten. Die Initiatoren können jedoch auch getrennt von der Monomerlösung dem Mischkneter zugeführt werden.

Die Monomerlösung wird vor der Polymerisation von Restsauerstoff befreit. Dies geschieht mittels Inertgas, welches im Gleichstrom, Gegenstrom oder dazwischenliegenden Eintrittswinkeln eingeleitet werden kann. Eine gute Durchmischung kann beispielsweise mit Düsen, statischen oder dynamischen Mischern oder Blasensäulen erzielt werden.

Die Monomerlösung wird ebenfalls mit einem Inertgasstrom durch den Reaktor geführt. Als Inertgase können unabhängig voneinander Stickstoff, ein Edelgas wie Argon, Kohlenmonoxid, Kohlendioxid, Schwefelhexafluorid oder Mischungen dieser Gase verwendet werden. Dabei ist es möglich das Inertgas ganz oder teilweise durch eine chemische Reaktion im Mischkneter zu erzeugen. Bevorzugt wird Stickstoff als Inertgas eingesetzt.

Um zu vermeiden, dass beim Anfahren des Mischkneters durch ausgehärtete Poly(meth)acrylatreste hohe Scherkräfte auf die Knetbarren und Stege und damit auf die Welle übertragen werden, wird der Mischkneter in einer bevorzugten Verfahrensvariante bei oder vor einem Stillstand vollständig über die Entleerungsklappe entleert.
In einer bevorzugten Verfahrensvariante wird der Mischkneter beim Anfahren vor der Zugabe der Edukte vorgeheizt. Das Aufheizen erfolgt dabei über das Gehäuse. Hierzu ist das Gehäuse mit einem Doppelmantel versehen, welcher einen Spalt bildet, durch den ein Temperiermedium zum Aufheizen des Mischkneters strömt. Als Temperiermedium eignen sich insbesondere Wasserdampf, Thermalöle oder Salzschmelzen. Zusätzlich kann das Aufheizen durch Zugabe eines warmen Mediums in den Mischkneter erfolgen. Geeignete Medien sind zum Beispiel warme Luft, warmer Stickstoff oder Wasserdampf.

Eine verbesserte Zerkleinerung des Poly(meth)acrylates wird dadurch erreicht, dass dem Mischkneter zunächst die Monomere als Edukte zugegeben werden und vorzugsweise an der Position, an der das Monomer zu 99,5 % zum Polymer umgesetzt ist, weitere Komponenten in Form von Feststoffpartikeln zugegeben werden. Als Feststoffpartikel eignet sich zum Beispiel feinteiliges, vernetztes Poly(meth)acrylat, das Pulverförmig vorliegt. Besonders bevorzugt sind das Poly(meth)acrylatpulver und das im Mischkneter hergestellte Produkt in ihrer chemischen Zusammensetzung identisch. Neben der Zugabe der Feststoffpartikel zum Gel nach 99,5% Umsatz ist auch jede weitere technisch sinnvolle Zugabe möglich. Durch die Zugabe der Feststoffpartikel wird ein Agglomerieren verhindert, da die Reibkräfte zwischen Produkt und Feststoffpartikeln in großem Maße zur Zerkleinerung beitragen. Hierdurch wird die Scherbeanspruchung auf die Knetbarren und Stege verringert und so auch die Beanspruchung der Welle verringert und damit eine Rissbildung in der Welle vermieden.

In einer bevorzugten Verfahrensvariante weisen die Feststoffpartikel eine maximale Partikelgröße von 500 µm, besonders bevorzugt von 300 µm auf.

Um zu vermeiden, dass sich das ausreagierte Poly(meth)acrylat auf der Welle absetzt und auf der Welle verklebt, wird die Welle in einer bevorzugten Verfahrensvariante während des Betriebes des Mischkneters gekühlt. Durch die Kühlung bildet sich ein Kondensatfilm auf der Welle aus, welcher ein Verkleben des Poly(meth)acrylates mit der Welle verhindert.

Im Folgenden wird die Erfindung anhand einer Zeichnung näher beschrieben.

Darin zeigt:
- Figur 1: einen Schnitt durch einen Mischkneter in Draufsicht,
- Figur 2: einen Schnitt durch einen Gehäuseausschnitt des Mischkneters im Bereich der Öffnung zur Produktabfuhr,
- Figur 3: eine durch ein Wehr ausgebildete Öffnung zur Produktabfuhr mit zusätzlicher Entleerungsklappe im Wehr,
- Figur 4: einen Schnitt durch einen Verdränger mit Kanal zur Eduktzufuhr.

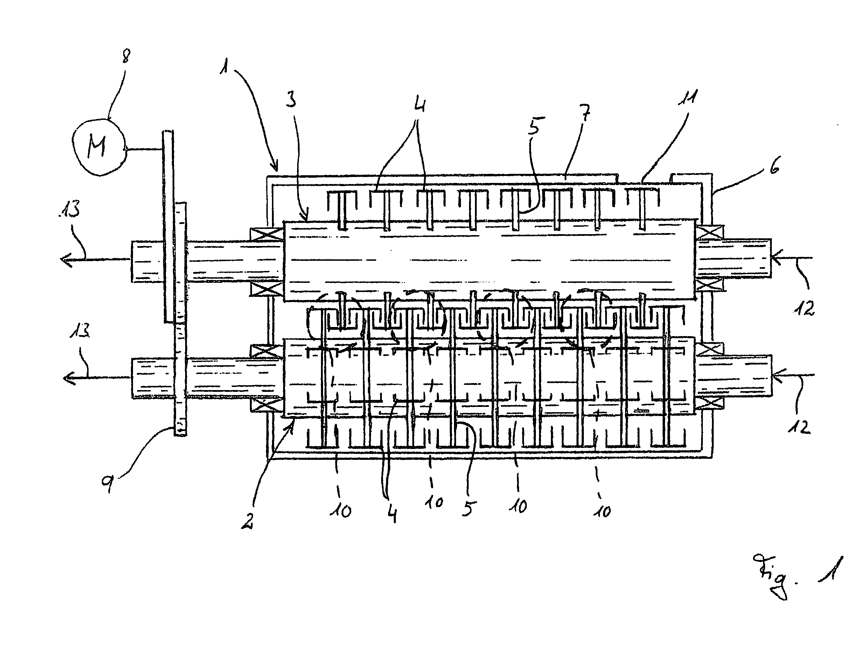

Eine Mischkneter 1, wie in Figur 1 dargestellt, umfasst eine Hauptwelle 2 und eine Putzwelle 3. Sowohl auf der Hauptwelle 2 als auch auf der Putzwelle 3 sind über den Umfang verteilt Knetbarren 4 angeordnet, die mit Stegen 5 mit der Hauptwelle 2 bzw. Putzwelle 3 verbunden sind. In der hier dargestellten Ausführungsform sind auf der Hauptwelle 2, über den Umfang der Hauptwelle 2 verteilt, acht Knetbarren 4 angeordnet. Im Unterschied dazu sind auf der Putzwelle 3 über den Umfang verteilt nur zwei Knetbarren 4 angeordnet.

Die Knetbarren 4 sind vorzugsweise U-förmig ausgebildet und greifen - wie in Figur 1 dargestellt - an der Seite, an der die Putzwelle 3 und die Hauptwelle 2 benachbart sind, ineinander. Hierdurch wird durch die Putzwelle 3 das Material, welches sich auf der Hauptwelle zwischen den Stegen ansammelt, entfernt. In der hier dargestellten Ausführungsform, bei der auf der Hauptwelle 8 Knetbarren 4 über den Umfang verteilt angeordnet sind und auf der Putzwelle 2 zwei Knetbarren 4, rotiert die Putzwelle 3 viermal so schnell wie die Hauptwelle 2. Hierdurch wird gewährleistet, dass die Knetbarren 4 der Putzwelle 3 in alle Knetbarren 4 der Hauptwelle 2 eingreifen. Neben der hier dargestellten Ausführungsform mit acht Knetbarren 4 auf der Hauptwelle 2 und zwei Knetbarren 4 auf der Putzwelle 3, ist jede beliebige andere Kombination an Knetbarren 4 auf Putzwelle 3 und Hauptwelle 2 denkbar. Anhand der Anzahl der Knetbarren 4 auf der Hauptwelle 2 und der Putzwelle 3 wird das Drehzahlverhältnis von Hauptwelle 2 zu Putzwelle 3 eingestellt.

Die Hauptwelle 2 und die Putzwelle 3 sind von einem Gehäuse 6 umschlossen. Um ein Temperieren des Mischkneters 1 zu ermöglichen, ist das Gehäuse 6 vorzugsweise mit einem Doppelmantel ausgeführt. Hierdurch wird ein Spalt 7 im Gehäuse gebildet, der von einem Temperiermedium durchströmt werden kann.

Die Wellen sind vorzugsweise über einen Motor 8 und ein Getriebe 9 angetrieben. Über das Getriebe ist die Geschwindigkeit der Wellen 2, 3 definiert. So ist es möglich, dass die Hauptwelle 2 und die Putzwelle 3 mit unterschiedlicher Geschwindigkeit rotieren, auch ist es möglich, dass die Hauptwelle 2 und die Putzwelle 3 mit gleicher Geschwindigkeit rotieren, weiterhin können die Hauptwelle 2 und die Putzwelle 3 entweder gleichsinnig oder gegensinnig betrieben werden.

Im Gehäuse 6 befinden sich oberhalb der Hauptwelle 2 und der Putzwelle 3 Öffnungen 10, die hier gestrichelt dargestellt sind. Über die Öffnungen 10 können dem Mischkneter 1 Edukte zugeführt werden. Auch ist es möglich, dass das im Mischkneter 1 hergestellte Produkt über die Öffnungen 10 entgast wird.

Zur Produktentnahme ist im Gehäuse 6 eine Öffnung 11 ausgebildet. Die Öffnung 11 zur Produktentnahme ist dabei vorzugsweise auf der Seite der Putzwelle 3 angeordnet, kann aber auch auf der Seite der Hauptwelle 2 angeordnet sein.

Zur Kühlung der Hauptwelle 2 und der Putzwelle 3 werden diese von einem Temperiermedium durchströmt. Die mit Bezugszeichen 12 bezeichneten Pfeile zeigen die Stelle, an der das Temperiermedium der Hauptwelle 2 bzw. Putzwelle 3 zugeführt wird. An der mit Bezugszeichen 13 gekennzeichneten Stelle wird das Temperiermedium wieder aus der Hauptwelle 2 bzw. Putzwelle 3 abgezogen. Neben der hier dargestellten Temperierung der Putzwelle 3 bzw. Hauptwelle 2 im Gegenstrom ist auch eine Temperierung der Wellen 2, 3 im Gleichstrom möglich. Bei einer Temperierung im Gleichstrom wird das Temperiermedium entgegen der Pfeilrichtung an der mit Bezugszeichen 13 bezeichneten Stelle aufgegeben und an der mit Bezugszeichen 12 bezeichneten Stelle entnommen.

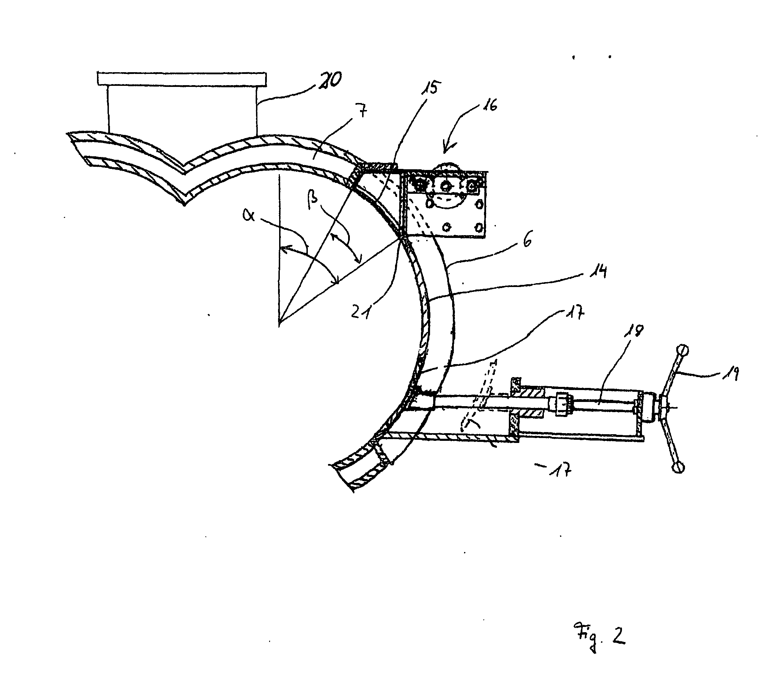

Figur 2 zeigt einen Schnitt durch einen Gehäuseabschnitt eines erfindungsgemäß ausgebildeten Mischkneters im Bereich der Öffnung zur Produktabfuhr.

Im Gehäuse 6 sind die vorzugsweise die als Hohlwellen ausgebildete Putzwelle 3 und Hauptwelle 2 aufgenommen. Die Eduktzufuhr erfolgt über die Öffnungen 10 oberhalb der Wellen 2, 3, die vorzugsweise als Döme 20 ausgeführt sind. Zur Produktentnahme ist im Gehäuse die Öffnung 11 ausgebildet. Die Öffnung 11 ist teilweise durch ein Wehr 14 verschlossen. Hierdurch wird der Öffnungsquerschnitt reduziert und die Position der Öffnung zur Produktabfuhr im oberen Drittel des Gehäuses 6 festgelegt. Die Abschlusskante 21 des Wehres 14, die gleichzeitig die Unterkante der Entleerungsöffnung bildet, ist vorzugsweise in einem Winkel α zur Senkrechten im Bereich von 30 bis 55° angeordnet. Der Öffnungswinkel β der Öffnung zur Produktabfuhr liegt vorzugsweise im Bereich von 10 bis 20°.

Die Querschnittsfläche der Öffnung zur Produktabfuhr kann durch eine Klappe 15 eingestellt werden. Hierzu ist die Klappe 15 bei der in Figur 2 dargestellten Ausführungsform in axiale Richtung verschiebbar. Die Bewegung der Klappe 15 erfolgt über einen Antrieb 16. Über die Querschnittsfläche der Öffnung zur Produktabfuhr wird der Füllgrad im Mischkneter 1 eingestellt. Je kleiner der Öffnungsquerschnitt ist, umso größer ist der Füllgrad bei gleichem Produkt und konstanter Drehzahl.

In der in Figur 2 dargestellten Ausführungsform befindet sich im unteren Teil des Wehres 14 eine Entleerungsklappe 17. Die Entleerungsklappe 17 wird mittels eines Handrades 19 über eine Spindel 18 betätigt. Die geöffnete Position der Entleerungsklappe 17 ist gestrichelt dargestellt.

Über die Entleerungsklappe 17 kann der Mischkneter 1 beim Abschalten entleert werden. Hierdurch wird vermieden, dass Produktreste im Mischkneter 1 verbleiben. Insbesondere bei der Herstellung von Poly(meth)acrylaten führen Reste dazu, dass diese weiter Aushärten und so beim erneuten Anfahren zu einer erhöhten Scherbelastung auf die Knetbarren 4 und Stege 5 führen.

Neben der Position der Entleerungsklappe 17 im Wehr 14, wie in Figur 2 dargestellt, kann die Entleerungsklappe 17 auch an jeder beliebigen anderen Position im Gehäuse 6 angeordnet sein. Bevorzugt ist die Entleerungsklappe 17 an der Produktentnahmeseite im Gehäuse 6 angeordnet. Das Wehr 14 und damit die Öffnung zur Produktabfuhr sowie die Entleerungsklappe 17 können entweder auf der Seite der Putzwelle 3 oder auf der Seite der Hauptwelle 2 im Gehäuse 6 angeordnet sein.

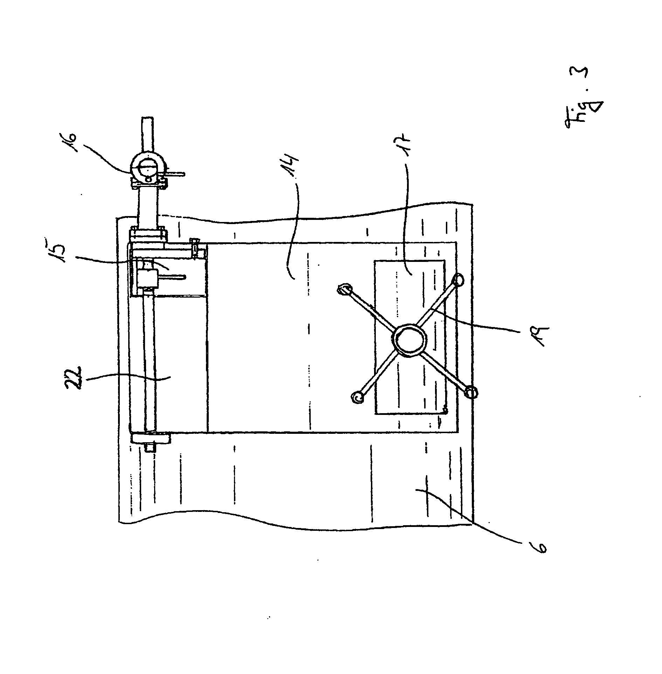

Figur 3 zeigt eine Draufsicht auf das Wehr und die Öffnung zur Produktabfuhr.

Bei der in Figur 3 dargestellten Ausführungsform ist die Entleerungsklappe 17 im Wehr 14 ausgebildet. Die Entleerungsklappe 17 wird über das Handrad 19 betätigt. Das Wehr 14 verschließt eine Öffnung im Gehäuse 6 soweit, dass nur noch die Öffnung zur Produktabfuhr 22 frei bleibt. Die Öffnung zur Produktabfuhr 22 befindet sich dabei im oberen Drittel des Gehäuses 6. Die Öffnung zur Produktabfuhr 22 kann in der hier dargestellten Ausführungsform durch die Klappe 15 weiter verschlossen werden, wodurch sich deren Öffnungsquerschnitt verringert. Die Klappe 15 wird über den Antrieb 16 angetrieben.

Neben der in den Figuren 2 und 3 dargestellten Ausführungsform, bei der der Öffnungsquerschnitt der Öffnung zur Produktabfuhr 22 durch eine in axiale Richtung bewegbare Klappe 15 eingestellt wird, kann der Öffnungsquerschnitt der Öffnung zur Produktabfuhr 21 auch durch eine in tangentialer Richtung bewegbare Klappe eingestellt werden. Die tangentiale Klappe kann dabei entweder von oben die Öffnung verschließen. In einer bevorzugten Ausführungsform kann die Abschlusskante 21 des Wehres 14 in Richtung der Öffnung zur Produktabfuhr 22 verschoben werden und so den Öffnungsquerschnitt der Öffnung zur Produktabfuhr 22 verkleinern.

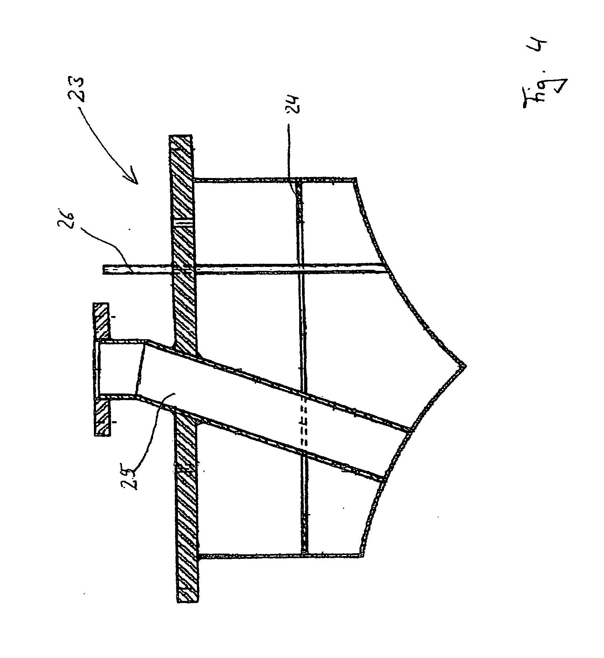

In Figur 4 ist ein Verdränger 23 dargestellt, mit dem die Öffnung 10 verschlossen werden kann. Hierzu wird der Verdränger 23 in den Dom 20 gesetzt und vorzugsweise über einen Flansch mit diesem verschraubt. Um Gewicht und Material einzusparen, ist der Verdränger 23 vorzugsweise als Hohlkörper ausgebildet. Zur Stabilisierung ist im Verdränger 23 eine ringförmig umlaufende Rippe 24 angeordnet. Um zu ermöglichen, dass über den Verdränger 23 Edukte zugeführt werden können, ist in einer bevorzugten Ausführungsform im Verdränger 23 ein Kanal 25 ausgebildet. Über den Kanal 25 können dem Mischkneter 1 entweder feste oder flüssige Edukte zugeführt werden. Bei der in Figur 4 dargestellten Ausrichtung des Kanals 25 werden die Edukte oberhalb einer der Wellen zugeführt. Neben dem hier dargestellten schrägen Verlauf ist es auch möglich, dass der Kanal 25 senkrecht im Verdränger 23 verläuft. Neben der Zugabestelle oberhalb einer Welle, so wie hier dargestellt, kann die Zugabestelle auch mittig zwischen den Wellen angeordnet sein.

Zur Zugabe von flüssigen Edukten in geringen Mengen kann im Verdränger 23 auch ein weiterer Kanal 26 aufgenommen sein, der einen im Vergleich zum Kanal 25 kleineren Querschnitt aufweist. Die Position, an der der weitere Kanal 26 in den Mischkneter mündet, ist vorzugsweise nahe der Mündungsposition des Kanals 25.

In einer bevorzugten Ausführungsform sind der Kanal 25 und der weitere Kanal 26 mit einer Kunststoffoberfläche versehen.

### Bezugszeichenliste

- 1: Mischkneter
- 2: Hauptwelle
- 3: Putzwelle
- 4: Knetbarren
- 5: Steg
- 6: Gehäuse
- 7: Spalt
- 8: Motor
- 9: Getriebe
- 10: Öffnung
- 11: Öffnung
- 12: Zulauf Temperiermedium
- 13: Ablauf Temperiermedium
- 14: Wehr
- 15: Klappe
- 16: Antrieb
- 17: Entleerungsklappe
- 18: Spindel
- 19: Handrad
- 20: Dom
- 21: Abschlusskante
- 22: Öffnung zur Produktabfuhr
- 23: Verdränger
- 24: Rippe
- 25: Kanal
- 26: Kanal

- α: Winkel
- β: Öffnungswinkel

## Patentansprüche

1. Mischkneter zur Herstellung von Poly(meth)acrylaten, mindestens zwei Wellen (2, 3) umfassend, auf deren Oberflächen Knetbarren (4) auf Stegen (5) angeordnet sind und die von einem Gehäuse (6) umschlossen sind, in dem mindestens eine Öffnung (10) oberhalb der Wellen und mindestens eine Öffnung (11) zur Produktabfuhr ausgebildet sind, wobei die Wellen (2, 3) an beiden Enden mindestens einfach drehbar gelagert und an mindestens einem Ende angetrieben sind, **dadurch gekennzeichnet, dass** die mindestens eine Öffnung oberhalb der Wellen durch einen Verdränger (23) verschlossen ist, dessen den Wellen zugewandte Seite so ausgebildet ist, dass zwischen dem Verdränger (23) und den Knetbarren der Wellen ein Spalt vorhanden ist, dessen Spaltweite maximal der durchgängigen Spaltweite zwischen Knetbarren und Gehäuse entspricht.

2. Mischkneter nach Anspruch 1, **dadurch gekennzeichnet, dass** mindestens eines der nachfolgenden Merkmale gewährleistet ist,
(a) die Konstruktion der Wellen so ausgeführt ist, dass die Biege-Eigenfrequenzen der Welle einen Abstand von mindestens 5 %. bevorzugt von mindestens 15 % und insbesondere von mindestens 20 % zu den Erregerfrequenzen aufweisen,
(b) mindestens eine Welle als Hohlwelle ausgebildet ist und von einem Temperiermedium durchströmt ist, wobei der Einlass (12) auf der einen und der Auslass (13) auf der anderen Seite der Welle angeordnet ist.

3. Mischkneter nach Anspruch 1 oder 2, **dadurch gekennzeichnet, dass** der Öffnungsquerschnitt der Öffnung (11) zur Produktabfuhr einstellbar ist.

4. Mischkneter nach einem der Ansprüche 1 bis 3, **dadurch gekennzeichnet, dass** der Mischkneter ein Reaktorvolumen von mindestens 500 I, vorzugsweise von mindestens 2000 I und insbesondere von mindestens 5000 I aufweist.

5. Mischkneter nach einem der Ansprüche 1 bis 4, **dadurch gekennzeichnet, dass** die Öffnung oberhalb der Wellen als Dom (20) im Gehäuse ausgebildet ist.

6. Mischkneter nach einem der Ansprüche 2 bis 5, **dadurch gekennzeichnet, dass** die Öffnung zur Produktabfuhr als Wehr (14) in der Gehäusewand ausgebildet ist.

7. Mischkneter nach einem der Ansprüche 2 bis 6, **dadurch gekennzeichnet, dass** der Öffnungsquerschnitt der Öffnung (11) zur Produktabfuhr während des Betriebes durch eine in axiale Richtung verschiebbare Klappe (15) oder durch eine in tangentiale Richtung verschiebbare Klappe eingestellt wird.

8. Mischkneter nach einem der Ansprüche 2 bis 7, **dadurch gekennzeichnet, dass** die Höhe des die Öffnung (11) zur Produktabfuhr bildenden Wehres (14) während des Betriebes durch tangentiales Verschieben des Wehres einstellbar ist.

9. Mischkneter nach einem der Ansprüche 1 bis 8, **dadurch gekennzeichnet, dass** der Mischkneter eine zusätzliche verschließbare Entleerungsklappe (17) mit einem Öffnungsquerschnitt von mindestens 10000 mm² umfasst, wobei die Entleerungsklappe (17) vorzugsweise auf der Produktentnahmeseite im Gehäuse (6) angeordnet ist.

10. Mischkneter nach Anspruch 9, **dadurch gekennzeichnet, dass** die Entleerungsklappe (17) im Wehr (14) ausgebildet ist.

11. Mischkneter nach einem der Ansprüche 1 bis 10, **dadurch gekennzeichnet, dass** im Verdränger (23) mindestens ein Kanal (25, 26) zur Eduktzufuhr ausgebildet ist.

12. Mischkneter nach Anspruch 11, **dadurch gekennzeichnet, dass** im Kanal (25) zur Eduktzufuhr eine Dosiervorrichtung aufgenommen ist.

13. Mischkneter nach Anspruch 11 oder 12, **dadurch gekennzeichnet, dass** der mindestens eine Kanal (25, 26) eine Kunststoffoberfläche aufweist.

14. Mischkneter nach einem der Ansprüche 11 bis 13, **dadurch gekennzeichnet, dass** bei mindestens zwei Kanälen (25,26) im Verdränger den Wellen zugewandten Öffnungen der Kanäle nah zueinander angeordnet sind.

15. Verfahren zur Herstellung von Poly(meth)acrylaten unter Verwendung eines Mischkneters nach einem der Ansprüche 1 bis 14.

## Claims

1. A mixing kneader for preparing poly(meth)acrylates, comprising at least two shafts (2, 3) on whose surfaces are disposed kneading bars (4) on elements (5) and which are enclosed by a casing (6), in which at least one orifice (10) above the shafts and at least one orifice (11) for product removal are formed, the shafts (2, 3) being mounted so as to be rotatable at the same or different rates and in the same or opposite sense at both ends and being driven at at least one end, the at least one orifice is closed above the shafts by a displacer (23) whose side facing the shafts is configured such that a gap is present between the displacer (23) and the kneading bars of the shafts and has a maximum gap width which corresponds to the available gap width between kneading bars and casing.

2. The mixing kneader according to claim 1, wherein at least one of the following features is ensured:
(a) the shafts are designed in such a way that the flexural resonant frequencies of the shaft have a separation of at least 5%, preferably of at least 15% and in particular of at least 20%, from the excitation frequencies,
(b) at least one shaft is configured as a hollow shaft and is flowed through by a temperature-control medium, the inlet (12) being disposed on one side and the outlet (13) on the other side of the shaft.

3. The mixing kneader according to claim 1 or 2, wherein the cross section of the orifice (11) for product removal is adjustable.

4. The mixing kneader according to any of claims 1 to 3, which has a reactor volume of at least 500 1, preferably of at least 2000 1 and in particular of at least 5000 1.

5. The mixing kneader according to any of claims 1 to 4, wherein the orifice above the shafts is formed as a dome (20) in the casing.

6. The mixing kneader according to any of claims 2 to 5, wherein the orifice for product removal is configured as a weir (14) in the casing wall.

7. The mixing kneader according to any of claims 2 to 6, wherein the cross section of the orifice (11) for product removal is adjusted during operation by a flap (15) shiftable in the axial direction or by a flap shiftable in the tangential direction.

8. The mixing kneader according to any of claims 2 to 7, wherein the height of the weir (14) forming the orifice (11) for product removal is adjustable during operation by tangential shifting of the weir.

9. The mixing kneader according to any of claims 1 to 8, which includes an additional closeable emptying flap (17) having an orifice cross section of at least 10 000 mm², the emptying flap (17) preferably being disposed on the product withdrawal side in the casing (6).

10. The mixing kneader according to claim 9, wherein the emptying flap (17) is formed in the weir (14).

11. The mixing kneader according to any of claims 1 to 10, wherein at least one channel (25, 26) for reactant feeding is formed in the displacer (23).

12. The mixing kneader according to claim 11, wherein a metering apparatus is accommodated in the channel (25) for reactant feeding.

13. The mixing kneader according to claim 11 or 12, wherein the at least one channel (25, 26) has a plastics surface.

14. The mixing kneader according to any of claims 11 to 13, wherein, in the case of at least two channels (25, 26) in the displacer, the orifices, facing the shafts, of the channels are arranged close to one another.

15. A process for preparing poly(meth)acrylates using the mixing kneader according to any of claims 1 to 14.

## Revendications

1. Malaxeur-mélangeur pour la production de poly(méth)acrylates, comprenant au moins deux arbres (2, 3), sur les surfaces desquels des barres de malaxage (4) sont disposées sur des traverses (5) et qui sont entourés d'un carter (6), malaxeur-mélangeur dans lequel sont ménagés au moins un orifice (10) au-dessus des arbres et au moins un orifice (11) pour la décharge du produit, les arbres (2, 3) étant placés de manière à pouvoir tourner au moins aisément aux deux extrémités et étant entraînés à au moins une extrémité, **caractérisé en ce que** ledit au moins un orifice au-dessus des arbres est fermé par un dispositif de déplacement (23) dont la face tournée vers les arbres est conçue de telle façon qu'entre le dispositif de déplacement (23) et les barres de malaxage des arbres est présent un espace dont l'écartement correspond au maximum à l'écartement constant entre barres de malaxage et carter.

2. Malaxeur-mélangeur selon la revendication 1, **caractérisé en ce qu'**est assurée au moins l'une des caractéristiques suivantes :
(a) la construction des arbres est conçue de manière que les fréquences propres en flexion de l'arbre présentent un écart d'au moins 5 %, de préférence d'au moins 15 % et en particulier d'au moins 20 % par rapport aux fréquences d'excitation,
(b) au moins un arbre est conçu sous forme d'arbre creux et dans celui-ci passe un milieu de régulation thermique, l'entrée (12) étant disposée d'un côté de l'arbre et la sortie (13) étant disposée sur l'autre.

3. Malaxeur-mélangeur selon la revendication 1 ou 2, **caractérisé en ce que** la section transversale de l'orifice (11) est ajustable pour la décharge du produit.

4. Malaxeur-mélangeur selon l'une quelconque des revendications 1 à 3, **caractérisé en ce que** le malaxeur-mélangeur présente un volume de réacteur d'au moins 500 1, de préférence d'au moins 2000 1 et notamment d'au moins 5000 1.

5. Malaxeur-mélangeur selon l'une quelconque des revendications 1 à 4, **caractérisé en ce que** l'orifice au-dessus des arbres est conçu sous forme de dôme (20) dans le carter.

6. Malaxeur-mélangeur selon l'une quelconque des revendications 2 à 5, **caractérisé en ce que** l'orifice destiné à la décharge du produit est conçu sous forme de déversoir (14) dans la paroi du carter.

7. Malaxeur-mélangeur selon l'une quelconque des revendications 2 à 6, **caractérisé en ce que** la section transversale de l'orifice (11) pour la décharge du produit est ajustée pendant le fonctionnement par un volet (15) déplaçable dans la direction axiale ou par un volet déplaçable dans la direction tangentielle.

8. Malaxeur-mélangeur selon l'une quelconque des revendications 2 à 7, **caractérisé en ce que** la hauteur du déversoir (14) formant l'orifice (11) pour la décharge du produit peut être ajustée pendant le fonctionnement par un déplacement tangentiel du déversoir.

9. Malaxeur-mélangeur selon l'une quelconque des revendications 1 à 8, **caractérisé en ce que** le malaxeur-mélangeur comprend un volet de vidange supplémentaire (17) pouvant être fermé, ayant une section transversale d'ouverture d'au moins 10 000 mm² ; le volet de vidange (17) étant disposé de préférence sur le côté de prélèvement du produit dans le boîtier (6).

10. Malaxeur-mélangeur selon la revendication 9, caractérisé en ce le volet de vidange (17) est disposé dans le déversoir (14).

11. Malaxeur-mélangeur selon l'une quelconque des revendications 1 à 10, **caractérisé en ce que** dans le dispositif de déplacement (23) au moins un canal (25, 26) est conçu pour l'alimentation en produit de départ.

12. Malaxeur-mélangeur selon la revendication 11, **caractérisé en ce que** dans le canal (25) est placé un dispositif doseur pour l'alimentation en produit de départ.

13. Malaxeur-mélangeur selon la revendication 11 ou 12, caractérisé en ce ledit au moins un canal (25, 26) présente une surface en matière plastique.

14. Malaxeur-mélangeur selon l'une quelconque des revendications 11 à 13, **caractérisé en ce que** dans le cas d'au moins deux canaux (25, 26) dans le dispositif de déplacement les orifices des canaux tournés vers les arbres sont placés à proximité l'un de l'autre.

15. Procédé pour la production de poly(méth)acrylates en utilisant un malaxeur-mélangeur selon l'une quelconque des revendications 1 à 14.
